(19) Europäisches Patentamt
European Patent Office
Office européen des brevets

(11) **EP 4 451 164 A1**

(12) **EUROPEAN PATENT APPLICATION**

(43) Date of publication:
**23.10.2024 Bulletin 2024/43**

(51) International Patent Classification (IPC):
***G06F 30/20*** *(2020.01)*

(21) Application number: **23315091.1**

(22) Date of filing: **21.04.2023**

(52) Cooperative Patent Classification (CPC):
**G06F 30/20;** G06F 2111/14; G06F 2119/02

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Quandela**
**91300 Massy (FR)**

(72) Inventor: **Wein, Stephen**
**22000 Saint-Brieuc (FR)**

(74) Representative: **Yes My Patent**
**32 Boulevard Richard Lenoir**
**75011 Paris (FR)**

(54) **ZERO-PHOTON GENERATOR METHOD AND SYSTEM**

(57) The invention concerns a method for implementing a zero-photon generator, comprising a first step of forming a photonic device (10) with at least one source (11) producing at least one pulse (12) collected into at least one input mode (13), a photonic circuit (14) that transforms the at least one input mode (13) into at least one output mode (15), and at least one detector (16) monitoring the at least one output mode (15) ; and a second step of simulating a set of at least one desired outcome quantity ( $\mathcal{P}$ ), each member of the set being associated with the at least one detector (16) observing at least one outcome when running the photonic device (10), by using a set of at least one generating quantity (

$$\mathcal{G}_\eta$$

) determined by evaluating a zero-photon generator for each unique virtual configuration contained in a set of at least one virtual configuration, so that there exists a generating map (

$$\mathcal{Z}_\eta^{-1}$$

) defined by the set of at least one virtual configuration such that

$$\mathcal{P} = \mathcal{Z}_\eta^{-1}\{\mathcal{G}_\eta\}$$

Figure 1

## Description

### TECHNICAL FIELD OF THE INVENTION

The invention concerns a method for implementing a zero-photon generator, in order to simulate photonic experiments. The invention also concerns a system configured for implementing such a method.

### BACKGROUND OF THE INVENTION

The current standard approach to simulate pulsed photon counting experiments relies on integrating measurements over the entire detection time or frequency spectrum of each pulse of light arriving at each detector in the experimental setup. This causes an undesirable exponential scaling of the simulation time, due to the necessity of numerically computing integrals with a dimension that increases with every detector added to the setup or photon resolved by the experiment. In practice, this limits the size of setups that can be reasonably simulated to include only two or three detectors. Given that photonic quantum information processing requires experiments involving many detectors resolving large numbers of photons, it is crucial to develop a method that can simulate larger systems more efficiently.

Some prior art references, such as [K. Fischer et al., Quantum 2, 69 (2018)], present a mathematical framework inspired by the quantum trajectories formalism. However, the standard quantum trajectories approach applied to light-matter interaction does not consider a variable detector efficiency to be a crucial ingredient. This is because neglecting detector efficiency allows the standard approach to be formulated as a simulation of pure quantum states, which in some cases leads to a computational speedup. Regardless, these prior approaches still rely on integrating time-resolved quantities and so they cannot circumvent the exponential scaling in the number of detectors.

### SUMMARY OF THE INVENTION

The aim of the invention is to provide an improved method for simulating photonic experiments.

To this end, the invention defined in claim 1 concerns a method for implementing a zero-photon generator, comprising a first step of forming a photonic device (10) with at least one source (11) producing at least one pulse (12) collected into at least one input mode (13), a photonic circuit (14) that transforms the at least one input mode (13) into at least one output mode (15), and at least one detector (16) monitoring the at least one output mode (15),

  wherein for the at least one source (11) :

  - $\hat{\rho}$ is a density operator quantifying the state of the at least one source (11) that evolves in time

($t$) from an initial state ($\hat{\rho}(t_0)$) at an initial time ($t_0$) following a master equation

$$\frac{d}{dt}\hat{\rho}(t) = \mathcal{L}(t)\hat{\rho}(t)$$

defined by the source generator ($\mathcal{L}$) that is a superoperator able to evolve in time, and that generates the time dynamics of the at least one source (11); wherein for the photonic circuit (14) :

  - **S** is a scattering matrix that is able to evolve in time, and that describes how the photonic circuit (14) transforms the at least one input mode (13) into the at least one output mode (15) ;

wherein for the at least one detector (16) :

  - $\vec{\eta}$ is a virtual configuration of the at least one detector (16), that is a vector of at least one real or complex virtual efficiency ($\eta_i$) of the at least one detector (16) monitoring a mode of the at least one output mode (15) labelled by the mode index ($i$), and that may be a function of the time ($t$) ;

  - $\vec{\mathcal{J}}_S$ is the detector jump vector, which is a vector of at least one detector jump superoperator ($\mathcal{J}_i$), where each detector jump superoperator ($\mathcal{J}_i$) depends on the scattering matrix (*S*) and describes the action on the density operator ($\hat{\rho}$) of the at least one source (11) caused by the at least one detector (16) detecting a photon in a mode of the at least one output mode (15) with the mode index ($i$);

such that:

$$\mathcal{L}_{\vec{\eta}}^{(0)} = \mathcal{L} - \vec{\eta} \cdot \vec{\mathcal{J}}_S$$

is a zero-photon generator, which is a superoperator that generates the time dynamics of the at least one source (11) given that no photons in the at least one output mode (15) were detected by the at least one detector (16) with the virtual configuration ($\vec{\eta}$).

The method further comprises a second step of simulating a set of at least one desired outcome quantity ($\mathcal{P}$), each member ($\mathcal{P}_N$) of the set ($\mathcal{P}$) being associated with the at least one detector (16) observing at least one outcome (*N*) when running the photonic device (10) from the initial time ($t_0$) until the time (*t*), by using a set of at least one generating quantity ( $\mathcal{G}_{\eta}$ ) determined by evaluating the zero-photon generator ( $\mathcal{L}_{\vec{\eta}}^{(0)}$ ) for each unique virtual configuration $(\vec{\eta})$ contained in a set of at least one virtual configuration ($\eta$), so that there exists a generating map ( $\mathcal{Z}_{\eta}^{-1}$ ) defined by the set of at least one virtual configuration ($\eta$) such that

$$\mathcal{P} = \mathcal{Z}_{\eta}^{-1}\{\mathcal{G}_{\eta}\}$$ .

The method of Claim 1 aims at determining all or some of the outcome quantities ( $\mathcal{P}$ ) of a photonic device (10), such as the probability to observe a particular combination of photon detection events, or the set of possible states of the source (11) after observing a detection event, while running the device from the initial time ($t_0$) until the time ($t$). Rather than simulating the light, the method simulates the photonic device (10) solely from the perspective of the source (11) that produce the light used by the device (10). The method relies on varying a virtual configuration $(\vec{\eta})$ of the detectors (16) and simulating the resulting impact on the source (11) via the conditional evolution dictated by the main mathematical object of the method: the zero-photon generator (ZPG, $\mathcal{L}_{\vec{\eta}}^{(0)}$ ). Since the ZPG method is a time-dynamic method, all device parameters, including the source generator ( $\mathcal{L}$ ), the scattering matrix ($S$), the virtual configuration $(\vec{\eta})$, the detector jump vector ( $\vec{\mathcal{J}_s}$ ), and hence the ZPG itself ( $\mathcal{L}_{\vec{\eta}}^{(0)}$ ), can be chosen to evolve or change with time to correctly model the photonic device (10).

The mathematical framework is inspired by the quantum trajectories formalism. However, the standard quantum trajectories approach applied to light-matter interaction [K. Fischer et al., Quantum 2, 69 (2018)] does not consider a variable detector efficiency to be a crucial ingredient. This is because neglecting detector efficiency allows the standard approach to be formulated as a stochastic simulation of pure quantum states, which in some cases leads to a computational speedup.

Thus, the feature of the ZPG method that most distinguishes it from the current state-of-the-art in quantum light-matter interaction theory is how it exploits the variation of a virtual configuration $(\vec{\eta})$ of real or complex efficiencies ($\eta_i$) in order to generate information about the photonic device (10) in the form of generating quantities ( $\mathcal{G}_{\eta}$ ). This information is then mapped onto the desired outcome quantities ( $\mathcal{P}$ ) by a generating map ( $\mathcal{Z}_{\eta}^{-1}$ ). In most cases, as we detail in the following claims, the map ( $\mathcal{Z}_{\eta}^{-1}$ ) can be implemented by inverting a generating function of the desired outcome quantities ( $\mathcal{P}$ ), which for complex detector efficiencies is mathematically related to a Z-transform.

Although the ZPG cannot benefit from advantages provided by a stochastic simulation, it does circumvent major computational problems faced when simulating time-integrated photon counting measurements. in many cases, these new advantages can provide an even greater computational speedup.

The virtual configuration $(\vec{\eta})$ is a vector, of at least one efficiency ($\eta_i$), one for each detector in the device. If each efficiency is such that $0 \leq \eta_i \leq 1$, then $\vec{\eta}$ corresponds to a physical detector configuration that has a direct experimental analogy. However, the ZPG extends to cases where an efficiency ($\eta_i$) can be any complex value $\eta_i \in \mathbb{C}$, where $\mathbb{C}$ is the set of all complex numbers. As such, the virtual configuration $(\vec{\eta})$ may not be physically implementable by the photonic device, but nevertheless allows to simulate the outcome quantities of the physical device. However, this does not prohibit the implementation of a photonic device with a physical configuration of real efficiencies that implements a ZPG corresponding to a virtual configuration of a different physical photonic device.

Further aspects of the invention, which are advantageous but not compulsory, are described here-after in relation with the dependent claims.

The aim of claims 2 to 4 is to explicitly outline how to obtain the associated generating quantities needed to implement the second step of claim 1. To illustrate this, we discuss a photon counting scenario where the at least one outcome () is a photon counting outcome () that describes the number of photons detected by the at least one detector (16). Although this may not be the most optimal outcome to consider in order to obtain any one desired outcome quantity (), most, if not all, outcome quantities can be obtained as a composition of outcome quantities associated with photon counting outcomes ().

As defined in claim 2, in the second step, the set of at least one desired outcome quantity ( $\mathcal{P}$ ) is a set of at least one desired conditional quantum channel ( $\mathcal{K}$ ) composed of conditional quantum channels ( $\mathcal{K}^{(n)}$ ) that act on the density operator ($\hat{\rho}$) of the at least one source (11), given that the at least one outcome ($N$) is a photon counting outcome ($n$), by choosing the set of at least one generating quantity ( $\mathcal{G}_\eta$ ) to be composed of generating superoperators ( $\mathcal{G}_{\vec{\eta}}^{(0)}$ ) that are the general solutions to the modified master equation :

$$\frac{d}{dt}\mathcal{G}_{\vec{\eta}}^{(0)}(t,t_0) = \mathcal{L}_{\vec{\eta}}^{(0)}(t)\mathcal{G}_{\vec{\eta}}^{(0)}(t,t_0)$$

,

that is defined by the zero-photon generator ( $\mathcal{L}_{\vec{\eta}}^{(0)}$ ) for each unique virtual configuration ( $\vec{\eta}$ ) in the set of at least one virtual configuration ( $\eta$ ) so that the generating map ( $\mathcal{Z}_\eta^{-1}$ ) can be obtained by inverting a channel generating function :

$$\mathcal{G}_{\vec{\eta}}^{(0)} = \sum_n P_{\vec{\eta}}(0|n)\mathcal{K}^{(n)}$$

,

wherein :

$$P_{\vec{\eta}}(0|n) = \prod_i (1 - \eta_i)^{n_i}$$

- is the zero-photon conditional probability, which is the probability that the at least one detector (16) with the virtual configuration ( $\vec{\eta}$ ) failed to detect one or more photons given that we would get the photon counting outcome ( $n$ ) if every virtual efficiency ( $\eta_i$ ) of the virtual configuration ( $\vec{\eta}$ ) was unity ;
- $n_i$ is the number of photons detected by the at least one detector (16) that is monitoring a mode of the at least one output mode (15) with the mode index ( $i$ ), given the photon counting outcome ( $n$ );

such that $\mathcal{K} = \mathcal{Z}_\eta^{-1}\{\mathcal{G}_\eta\}$ .

Claim 2, in the language of photon counting outcomes ( $n$ ), describes the scenario where the desired outcome quantities ( $\mathcal{P}_N$ ) are conditional quantum channels ( $\mathcal{K}^{(n)}$ ), which are channels that describe how any initial source state ( $\hat\rho(t_0)$ ) will have evolved in time ( $t$ ) given that we observed a particular outcome ( $n$ ). These channels are useful for simulating successive light-matter interactions where the initial state ( $\hat\rho(t_0)$ ) of the device may change but the device and its parameters remain the same, such as for quantum repeaters, quantum memories, entanglement generation.
Claim 2 also describes the first explicit approach to obtain generating quantities ( $\mathcal{G}_\eta$ ) from the ZPG ( $\mathcal{L}_{\vec{\eta}}^{(0)}$ ), that is, by solving a first-order linear differential equation. There are many ways that this equation can be solved, including spectral methods and finite difference methods, and most optimal way will depend on the photonic device (10).
As defined -in claim 3, the set of the at least one desired outcome quantity ( $\mathcal{P}$ ) is a set of at least one conditional density operator (^) composed of conditional density operators ( $\hat\rho^{(n)}$ ) that quantify the state of the at least one source (11) at time ( $t$ ) given that the at least one outcome ( $N$ ) is a photon counting outcome ( $n$ ) observed between the initial time ( $t_0$ ) and the time ( $t$ ), by choosing the set of at least one generating quantity ( $\mathcal{G}_\eta$ ) to be composed of generating operators ( $\hat{G}_{\vec{\eta}}^{(0)}$ ), wherein in the second step, the generating operators ( $\hat{G}_{\vec{\eta}}^{(0)}$ ) can be determined as solutions to the modified master equation :

$$\frac{d}{dt}\hat{G}_{\vec{\eta}}^{(0)}(t) = \mathcal{L}_{\vec{\eta}}^{(0)}(t)\hat{G}_{\vec{\eta}}^{(0)}(t)$$

,

with initial condition $\hat{G}_{\vec{\eta}}^{(0)}(t_0) = \hat\rho(t_0)$ and that is defined by the zero-photon generator ( $\mathcal{L}_{\vec{\eta}}^{(0)}$ ) for each unique virtual configuration ( $\vec{\eta}$ ) in the set of at least one virtual configuration ( $\eta$ ), or in a third step following

$$\hat{G}_{\vec{\eta}}^{(0)}(t) = \mathcal{G}_{\vec{\eta}}^{(0)}(t,t_0)\hat\rho(t_0)$$

after having determined the corresponding generating superoperator ( $\mathcal{G}_{\vec{\eta}}^{(0)}$ ) in the second step, so that the generating map ( $\mathcal{Z}_\eta^{-1}$ ) can be obtained by inverting an operator generating function:

$$\hat{G}_{\vec{\eta}}^{(0)} = \sum_{n} P_{\vec{\eta}}(0|n)\hat{\rho}^{(n)},$$

such that $\hat{\rho} = \mathcal{Z}_{\eta}^{-1}\{\mathcal{G}_{\eta}\}$.

Claim 3 covers the scenario where the desired outcome quantities ( $\mathcal{P}_N$ ) are conditional density operators ($\hat{\rho}^{(n)}$) of the at least one source (11). A conditional quantum state ($\hat{\rho}^{(n)}$) is the state of the source (11) at the time ($t$) given that we observed a particular outcome ($n$) sometime since the initial time ($t_0$). This quantity is useful for understanding how the source (11) and the light are correlated or possibly entangled. For example, this allows for the simulation and analysis of spin-photon entanglement schemes.

As defined in claim 4, the set of at least one desired outcome quantity ( $\mathcal{P}$ ) is a set of at least one desired photon number probability ($p$) composed of photon number probabilities ($p^{(n)}$) given that the at least one outcome ($N$) is a photon counting outcome ($n$) observed between the initial time ($t_0$) and the time ($t$), by choosing the set of at least one generating quantity ( $\mathcal{G}_{\eta}$ ) to be composed of generating points ( $G_{\vec{\eta}}^{(0)}$ ), wherein in the second step, the generating points ( $G_{\vec{\eta}}^{(0)}$ ) can be determined as solutions to the modified rate equation :

$$\frac{d}{dt}G_{\vec{\eta}}^{(0)}(t) = \mathrm{Tr}\left\{\mathcal{L}_{\vec{\eta}}^{(0)}(t)\hat{G}_{\vec{\eta}}^{(0)}(t)\right\},$$

with initial condition $\hat{G}_{\vec{\eta}}^{(0)}(t_0) = \hat{\rho}(t_0)$ along with $G_{\vec{\eta}}^{(0)}(t_0) = 1$, and that is defined by the zero-photon generator ( $\mathcal{L}_{\vec{\eta}}^{(0)}$ ) for each unique virtual configuration ($\vec{\eta}$) in the set of at least one virtual configuration ($\eta$), or in a third step following $G_{\vec{\eta}}^{(0)} = \mathrm{Tr}\{\mathcal{G}_{\vec{\eta}}^{(0)}(t,t_0)\hat{\rho}(t_0)\}$ after having determined the corresponding generating superoperator (

$\mathcal{G}_{\vec{\eta}}^{(0)}$ ) in the second step, or in a fourth step following $G_{\vec{\eta}}^{(0)} = \mathrm{Tr}\left\{\hat{G}_{\vec{\eta}}^{(0)}\right\}$ after having determined the corresponding generating operator ($\hat{\vec{G\eta}}$) in the third step, so that the generating map ( $\mathcal{Z}_{\eta}^{-1}$ ) can be obtained by inverting a probability generating function:

$$G_{\vec{\eta}}^{(0)} = \sum_{n} P_{\vec{\eta}}(0|n)p^{(n)},$$

such that $p = \mathcal{Z}_{\eta}^{-1}\{\mathcal{G}_{\eta}\}$.

Claim 4 covers the scenario where the desired outcome quantities ( $\mathcal{P}_N$ ) are photon counting probabilities ($p^{(n)}$), which are the probabilities of observing photon counting outcomes ($n$). This quantity is useful for obtaining all or part of the probability distribution of the outcomes, and it is critical for simulating boson sampling type experiments using the ZPG ( $\mathcal{L}_{\vec{\eta}}^{(0)}$ ), or for determining the efficiency of conditional quantum processes described in claims 2 and 3.

The claims 1 to 4 have not specified how to choose the set () of unique virtual configurations () because the method works regardless of the choice so long as they are unique. However, the choice can affect the time needed to perform the simulation, depending also on the desired outcome quantities (), as well as the ease of determining and implementing the corresponding generating map ().

Claims 5 to 9 cover different ways to restrict the possible virtual configurations () so that the generating map () can be configured to provide commonly desired outcome quantities () in a more efficient way.

As defined in claim 5, at least one virtual efficiency ( $\eta_i$ ) of the virtual configuration ( $\vec{\eta}$ ) is restricted to be a binary value, either 0 or 1, so that the generating map ( $\mathcal{Z}_{\eta}^{-1}$ ) is configured to provide the set of at least one desired outcome quantity ( $\mathcal{P}$ ) that contains at least one member ( $\mathcal{P}_N$ ) associated with observing the at least one outcome ($N$) that includes at least one outcome where the at least one detector (16) observes either the presence or absence of light in one or more of the at least one output mode (15).

Claim 5 covers how restricting the virtual con-

figuration ($\vec{\eta}$) to include binary values allows to construct the generating map ($\mathcal{Z}_{\eta}^{-1}$) that provides outcome quantities ($\mathcal{P}_N$) associated with detecting either the presence or absence of light in an output mode (15). Using the ZPG ($\mathcal{L}_{\vec{\eta}}^{(0)}$), this can be done directly, without having to first simulate all possible photon counting outcomes ($n$) of the device (10) and subsequently sum over all quantities associated with outcomes where at least one photon was detected. As a result, this configuration can provide a significant reduction in simulation time.

As defined in claim 6, at least one virtual efficiency ($\eta_i$) of the virtual configuration ($\vec{\eta}$) is restricted to be chosen from $m + 1 \geq 2$ values equally distributed between 0 and a chosen value $\eta_{\text{max}} \leq 1$, so that the generating map ($\mathcal{Z}_{\eta}^{-1}$) is configured to provide the set of at least one desired outcome quantity ($\mathcal{P}$) that contains at least one member ($\mathcal{P}_N$) associated with observing the at least one outcome ($N$) that includes the order $m$ coincidence auto-correlation outcome of one or more modes of the at least one output mode (15), and wherein taking $\eta_{\text{max}} \to 0$ will also provide the set of at least one desired outcome quantity ($\mathcal{P}$) that contains at least one member ($\mathcal{P}_N$) associated with observing the at least one outcome ($N$) that includes the order $m$ integrated intensity auto-correlation ($g^{(m)}$) outcome of one or more modes of the at least one output mode (15).

Another common set of desired outcome quantities ($\mathcal{P}$) is the integrated intensity auto-correlations ($g^{(m)}$) of a pulse of light. These quantities are often used to categorise states of light such as single-photon states, coherent states, and thermal states. They can be evaluated as a sum over all possible photon number probabilities ($p^{(n)}$), which for devices (10) that output many photons can be a summation of many terms. By restricting the virtual configuration ($\vec{\eta}$) to equally-distributed physical values, the ZPG ($\mathcal{L}_{\vec{\eta}}^{(0)}$) can be configured to mimic a generalized Hanbury Brown and Twiss correlation measurement of an output mode (15), which can provide all orders of auto-correlation ($g^{(m)}$) up to the order $m$ by evaluating the ZPG ($\mathcal{L}_{\vec{\eta}}^{(0)}$) only $m$ times, resulting in a constant computational cost regardless of the number of photons output by the device (10), circumventing the problem.

As defined in claim 7, at least one virtual efficiency ($\eta_i$) of the virtual configuration ($\vec{\eta}$) is restricted to be exactly 2, so that the associated zero-photon conditional probability ($P_{\vec{\eta}}(0|n)$) of a photon counting outcome ($n$) contains the term $(1 - \eta_i)^{n_i} = (-1)^{n_i}$, leading to a parity summation over the number of photons ($n_i$), which corresponds to the Wigner function ($W$) at the origin of phase space, so that by choosing the at least one source (11) to include a local oscillator, such as a laser, able to displace the light in phase space by the complex amplitude ($\alpha$) prior to the at least one detector (16), the generating map ($\mathcal{Z}_{\eta}^{-1}$) is configured to provide the set of at least one desired outcome quantities ($\mathcal{P}$) that contains at least one member ($\mathcal{P}_N$) associated with observing the at least one outcome ($N$) that includes at least one phase-space measurement outcome.

Another common way to characterise a state of light is to measure its Wigner function in phase space. A photonic device (10) that measures a Wigner function uses a local oscillator, such as a laser, as a reference state of light, and usually a homodyne or heterodyne measurement that is in opposition to photon counting measurements. However, the ZPG ($\mathcal{L}_{\vec{\eta}}^{(0)}$), being a photon counting method that extends to virtual configurations ($\vec{\eta}$), can still be configured to efficiently provide measurements of the Wigner function by choosing one or more virtual efficiencies ($\eta_i$) to be 2. This choice allows to simulate a measurement of the Wigner function at the origin of phase space. By including a second source that can displace the light in phase space prior to detection, the approach can be used to simulate measurements of the Wigner function at any point in phase space by evaluating the ZPG ($\mathcal{L}_{\vec{\eta}}^{(0)}$) only once, which contrasts with a standard photon counting simulation that requires a summation over all possible photon number probabilities ($p^{(n)}$).

As defined in claim 8, at least one virtual efficiency ($\eta_i$) of the virtual configuration ($\vec{\eta}$) is restricted to be chosen from unique complex values where $1 - \eta_i$ is a root of unity, so that the magnitude $|1 - \eta_i| = 1$ is constant, and so that the corresponding generating map ($\mathcal{Z}_{\eta}^{-1}$) can be partially implemented as an inverse discrete Fourier transform.

Restricting the virtual efficiency ($\eta_i$) to real values between 0 and 1 can sometimes result in numerical instability when computing and/or applying the generat-

ing map ( $\mathcal{Z}_\eta^{-1}$ ) if the number of photons produced by the device (10) is large. The ZPG ( $\mathcal{L}_{\vec{\eta}}^{(0)}$ ) can be configured to avoid this instability problem by choosing virtual efficiencies ($\eta_i$) from a set of unique complex values that have a constant magnitude, something that is impossible to do if the efficiency ($\eta_i$) can only be a real value. This procedure also allows the generating map ( $\mathcal{Z}_\eta^{-1}$ ) to be implemented, at least partially, using optimized Fast Fourier Transform (FFT) algorithms. Hence, the ZPG ( $\mathcal{L}_{\vec{\eta}}^{(0)}$ ) can accurately and efficiently simulate desired outcome quantities ( $\mathcal{P}$ )) associated with the detection of many photons.

As defined in claim 9, the set of at least one virtual configuration ($\eta$) and the corresponding generating map ( $\mathcal{Z}_\eta^{-1}$ ) needed to obtain the set of at least one desired outcome quantity ( $\mathcal{P}$ ) from the set of at least one generating quantity ( $\mathcal{G}_\eta$ ) is determined or approximated, at least partially, using numerical optimization or machine learning techniques including linear regression, maximum-likelihood estimation, and neural networks.

Although we would often like to derive, by hand, optimal ways to configure the ZPG ( $\mathcal{L}_{\vec{\eta}}^{(0)}$ ), sometimes the set of at least one desired outcome quantity ( $\mathcal{P}$ ) may not allow for a straightforward configuration ($\vec{\eta}$) like those described in claims 5 to 8. However, the ZPG method described in claims 1 to 4 is universal in the sense that it can provide all the information about the photonic device (10). Thus, finding optimal configurations for any given set ( $\mathcal{P}$ ) could be achieved using advanced techniques like numerical optimisation and machine learning. These additional methods could also be used in combination with the restrictions described in claims 5 to 8.

As defined in claim 10, the at least one source (11) is a single source. Often it is useful to characterise the state of light produced by a single source in order to benchmark it or design applications for the source of light. The ZPG ( $\mathcal{L}_{\vec{\eta}}^{(0)}$ ) can be configured to provide a way to simulate any relevant quantities ( $\mathcal{P}$ ) that describe the quality of a single source, or its application to a task.

As defined in claim 11, the at least one source (11) is an ensemble of sources. In many cases, scaling up an application will require adding multiple sources to the device (10), either multiple identical sources or a mix of different sources that produce different states of light. The ZPG ( $\mathcal{L}_{\vec{\eta}}^{(0)}$ ) can also capture these scenarios by choosing the source generator ( $\mathcal{L}$ ) appropriately.

As defined in claim 12, the at least one source (11) has degrees of freedom that can be entangled with the state of light. Since the ZPG method focuses on the state of the source (11) while also simulating the outcomes ($N$) from the entire device (10), it can be naturally extended to situations where the source (11) itself becomes crucial to the device (10) operation. Rather than simply producing the light, the source (11) can have degrees of freedom, such as the spin state of an electron, that becomes entangled or correlated with the state of light. The ZPG ( $\mathcal{L}_{\vec{\eta}}^{(0)}$ ) can provide all the information necessary to simulate and analyse this kind of a light-matter device.

As defined in claim 13, the action on the at least one source (11) due to detecting a photon by the at least one detector (16) is described by a proportionality relationship $\hat{a}_i \propto c_i \hat{\sigma}_i$ between the annihilation operator ($\hat{a}_i$) of a mode of the at least one input mode (13) with the mode index ($i$) and the lowering operator ($\hat{\sigma}_i$) of the at least one source (11) responsible for emitting light into a mode of the at least one input mode (13) with the mode index ($i$), where the complex proportionality coefficient ($c_i$), which may or may not be dependent on time, is related to the rate of photons collected into a mode of the at least one input mode (13) with the mode index ($i$), such that the that the zero-photon generator takes the form :

$$\mathcal{L}_{\vec{\eta}}^{(0)} = \mathcal{L} - \vec{\mathcal{J}}^+ \cdot \left( S^\dagger \tilde{\eta} S \right) \cdot \vec{\mathcal{J}}^- ,$$

wherein :

- $\vec{\mathcal{J}}^+$ is a vector of right-acting half-jump superoperators ( $\mathcal{J}_i^+$ ) defined by the action $\mathcal{J}_i^+ \hat{\rho} = c_i^* \hat{\rho} \hat{\sigma}^\dagger$ on the density operator ($\hat{\rho}$) of the at least one source (11) ;

- $\vec{\mathcal{J}}^-$ is a vector of left-acting half-jump superoperators ( $\mathcal{J}_i^-$ ) defined by the action $\mathcal{J}_i^- \hat{\rho} = c_i \hat{\sigma} \hat{\rho}$ on the density operator ($\hat{\rho}$) of the

at least one source (11) ;

- $\tilde{\eta}$ is the diagonal matrix where the diagonal is given by the virtual configuration $(\vec{\eta})$,

Claim 13 covers an explicit method to construct the ZPG ( $\mathcal{L}^{(0)}_{\hat{\eta}}$ ) in terms of operators acting on the density operator ($\hat{\rho}$) of the at least one source (11). This form of ZPG can be used to design a fictitious source (11) whose purpose is to just produce the specific state of light we wish to simulate. It can also be used to model a real source (11) based on physical principles, such as a quantum dot or microcavity, in order to simulate a device that is then susceptible to all the physical limitations and errors inherited from the physical model.

The invention also concerns a system configured to implement the methods described here-above, the system comprising:

- a photonic device (10) with at least one source (11) producing at least one pulse (12) collected into at least one input mode (13), a photonic circuit (14)that transforms the at least one input mode (13) into at least one output mode (15), and at least one detector (16) monitoring the at least one output mode (15).
- a computer unit configured for simulating the operation of the photonic device.

In a particular embodiment, the computer unit may be configured for performing numerical post-processing of experimental measurements.

The ZPG method focuses on the process of obtaining desired outcome quantities ($\mathcal{P}$) using generating quantities ( $\mathcal{G}_{\eta}$ ) extracted from observing the absence of light for various virtual configurations $(\vec{\eta})$, This can be a powerful method for simulating the operation of a photonic device (10) using a classical computer. However, the generating quantities could also be obtained from measurements of a real device that are post-processed using a computer unit. Since many of the configurations $(\vec{\eta})$ available to the ZPG ( $\mathcal{L}^{(0)}_{\vec{\eta}}$ ) do not have a direct experimental analogy on the photonic device (10) we wish to simulate, the ZPG system may need to be configured as a different photonic device than the one we wish to simulate in order to mimic the correct virtual configuration $(\vec{\eta})$, This may involve modifying the scattering matrix ($S$) or the source (11).

As defined in claim 15, the system can be designed to process quantum information.

The ZPG system can be designed to process quantum information based on the principles of the ZPG method. This includes information processing such as quantum computing, quantum communication, and quantum sensing. In the context of quantum computing, the ZPG system may be universal for PostBQP because it includes boson sampling, and boson sampling is universal for PostBQP. In addition, since the ZPG is constructed from the source generator ( $\mathcal{L}$ ), which can in principle include any arbitrary Hamiltonian, the ZPG system may also be universal for BQP if it is designed to take advantage of the source degrees of freedom. Possible applications of the invention include:

- Simulating photon counting experiments
- Source photon number statistics
- Boson sampling experiments
- State tomography of entangled light
- Process tomography of fusion gates
- Homodyne measurements
- Photon-mediated entanglement generation
- Conditional quantum channels

BRIEF DESCRIPTION OF THE DRAWINGS

The invention will now be explained in correspondence with the annexed figures, and as an illustrative example, without restricting the object of the invention. In the annexed figures:

- Figure 1 is a setup diagram of a first embodiment of the invention, designed for simulating photonic experiments.
- Figure 2 is a logic diagram describing the ZPG evaluation for the first embodiment of Figure 1.
- Figure 3 is a setup diagram of a second embodiment of the invention, designed for evaluating source photon number statistics.
- Figure 4 is a logic diagram describing the ZPG evaluation for the second embodiment of Figure 3.
- Figure 5 is a setup diagram of a third embodiment of the invention, designed for simulating Boson sampling experiments.
- Figure 6 is a logic diagram describing the ZPG evaluation for the third embodiment of Figure 5.
- Figure 7 is a setup diagram of a fourth embodiment of the invention, designed for simulating state tomography of entangled light.
- Figure 8 is a setup diagram of a fifth embodiment of the invention, designed for simulating process tomography of fusion gates.
- Figure 9 is a setup diagram of a sixth embodiment of the invention, designed for simulating homodyne measurements.
- Figure 10 is a logic diagram describing the ZPG evaluation for the sixth embodiment of Figure 9.
- Figure 11 is a setup diagram of a seventh embodiment of the invention, designed for simulating photon-mediated source entanglement.
- Figure 12 is a logic diagram describing the ZPG evaluation for the seventh embodiment of Figure 11.

- Figure 13 is a logic diagram describing the ZPG evaluation for an eighth embodiment of the invention, designed for simulating conditional source channels.

## DETAILED DESCRIPTION OF SOME EMBODIMENTS

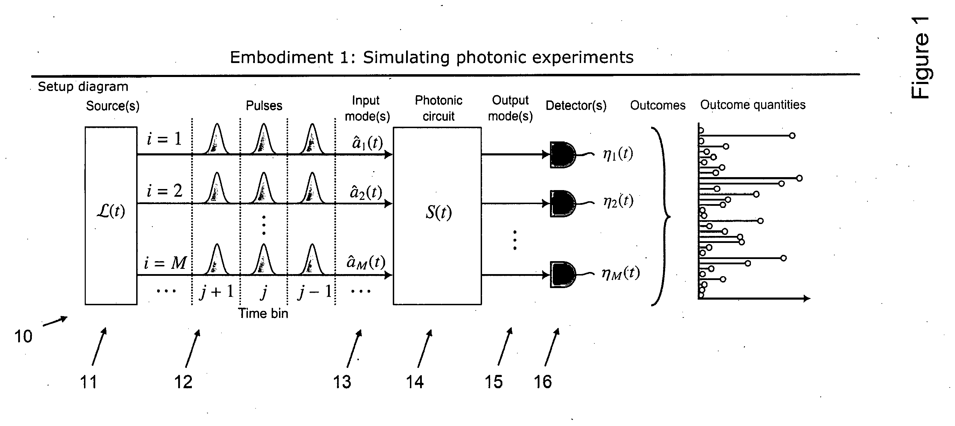

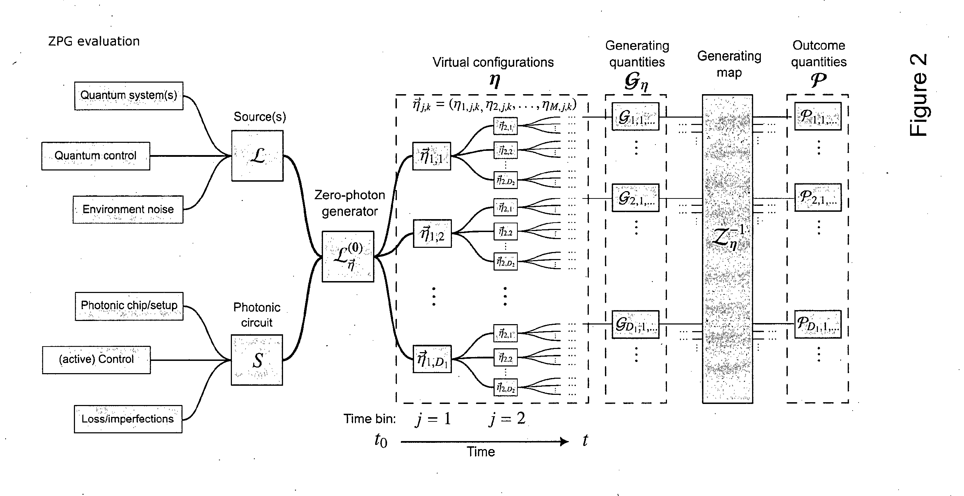

Figure 1 and 2 describe a first embodiment of the invention, for simulating photonic experiments.

We can follow the setup diagram of Figure 1 to simulate a photonic experiment using the ZPG method according to the invention. This diagram illustrates a photonic device (10) with the sources (11) producing pulses (12), the input modes (13), the photonic circuit (14), the output modes (15), the detectors (16), the outcomes ($N$) and associated outcome quantities ($\mathcal{P}$). The pulses (12) can be produced at different moments in time ($t$), they may be classical states of light, or quantum states of light, or be in the vacuum state (empty pulses). Time ($^\wedge$) may be divided into disjoint intervals called time bins, labelled by a time bin index ($j$), The time bins can be chosen arbitrarily regardless of the pulse (12) shape and domain. The pulses (12) pass through the photonic circuit (14), which is physically implemented by a scattering matrix ($S$) that transforms the input modes (13) into the output modes (15). The output modes (15) are monitored by the detectors (16). Each detector (16) has an associated detection efficiency ($\eta_i$) for monitoring mode ($i$) that can change with time ($^\wedge$) either continuously, or discretely for each time bin ($-^\wedge$).

On Figure 2, the ZPG evaluation diagram illustrates the model of the device (10) composed of physical features of a photonic experiment, the source generator (L) describing the physics of the source, and the scattering matrix ($S$). The source generator ($\mathcal{L}$) and circuit scattering matrix ($S$) may also be explicitly time dependent, allowing for the simulation of complicated device operation, such as when different circuits are applied to each time bin ($j$), or for when the source alters its behaviour due to past emission events. These experimentally defined components combine to define the zero-photon generator (ZPG, $\mathcal{L}^{(0)}_{\vec{\eta}}$ ). The ZPG is then evaluated for each virtual configuration ($\vec{\eta}$) in the set of virtual configurations ($\eta$) needed to obtain the desired outcome quantities ($\mathcal{P}$ ).

Rather than evaluating the ZPG for all possible combinations of virtual configurations within each time bin, the ZPG can be more efficiently evaluated in tree-like fashion as the simulation progresses in time ($t$), by using generating quantities produced in the previous time bin to obtain all the generating quantities of the current time bin. Thus, the intermediate virtual configurations ($\overrightarrow{\eta_{j,k}}$) are labelled accordingly to the time bin index ($^\wedge$) and the configuration index ($k$) within the time bin. At the time

($t$), which may be the final time of the experiment, the final set of virtual configurations ($\eta$) contains a unique virtual configuration ($\overrightarrow{\eta}$) corresponding to each possible path through the branching tree. The set of generating quantities ( $\mathcal{G}_{\boldsymbol{\eta}}$ ) contains members ( $\mathcal{G}_{k_1,k_2,\cdots}$ ) thus uniquely labelled by the configuration index ($k$) for each bin ($j$). This set ( $\mathcal{G}_{\boldsymbol{\eta}}$ ) is then mapped onto the set of desired outcome quantities ($\mathcal{P}$) using the generating map ( $\mathcal{Z}^{-1}_{\eta}$ ). These outcome quantities are labelled following the same notation as the generating quantities for convenience, although the number of quantities may differ in the two sets.

Other embodiments of the invention are represented on Figures 2 to 13. In these embodiments, -elements similar to the first embodiment have the same references and work in the same way. Only the differences with respect to the first embodiment are described hereafter.

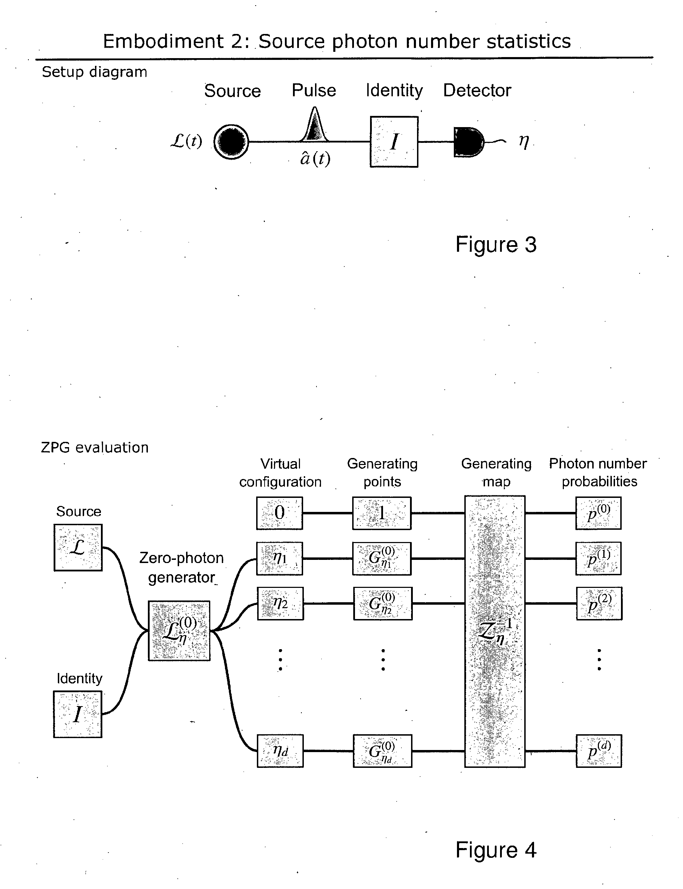

Figures 3 and 4 describe a second embodiment of the invention, for evaluating source photon number statistics.

On Figure 3, the setup diagram illustrates the simplest implementation of the ZPG method. It comprises a single source (11) emitting a single pulse (12) into a single input mode (13) that passes through the identity circuit (14) with an output mode (15) monitored by a single detector (16). The outcome ($N$) of the experiment is an integer representing how many photons were observed by the detector (16). The desired outcome quantities ($\mathcal{P}$) are the photon number probabilities ($p^{(n)}$) or quantities computed from them.

On Figure 4, the ZPG evaluation diagram shows that ZPG ( $\mathcal{L}^{(0)}_{\vec{\eta}}$ ) is constructed from the source generator ($\mathcal{L}$) and the identity scattering matrix ($I$). In this case, it depends on the single virtual efficiency ($\eta$) of the detector (16) and is conditioned on observing the zero-photon outcome, indicating no photons were observed by the detector (16). Since any physical experiment will produce light with a finite amount of energy, there always exists a maximum photon number ($d$) where ($p^{(n)}$) is zero for all practical purposes if the photon counting outcome ($n$) describes the detection of more photons than the maximum photon number ($d$). To obtain all photon number probabilities ($p^{(n)}$) up to ($p^{(d)}$), the ZPG ( $\mathcal{L}^{(0)}_{\vec{\eta}}$ ) can be evaluated for $d + 1$ unique virtual configurations ($\overrightarrow{\eta}$), Since we have just one efficiency, and $\eta = 0$ prohibits

the observation of photons, one generating point ( $G_{\vec{\eta}}^{(0)}$ ) can be 1 without evaluating the ZPG ( $\mathcal{L}_{\vec{\eta}}^{(0)}$ ), which reduces the total number of evaluations needed to $d$. The set of $d + 1$ generating points ( $G_{\vec{\eta}}^{(0)}$ ) are then transformed into the photon number probabilities ($p^{(n)}$) following the generating map ( $\mathcal{Z}_{\eta}^{-1}$ ). This map depends on the exact choice of virtual efficiencies ($n$), and hence there can be multiple ways to perform this step.

The diagrams and description here-above discuss photon number probabilities ($p^{(n)}$). But as described before, the ZPG method also allows to directly obtain outcome quantities ( $\mathcal{P}$ ) that can be computed from photon number probabilities ($p^{(n)}$) but at a lesser computational cost. For a simple illustrative example, consider obtaining the probability of observing at least one photon by using the sum $\sum_{n=1}^{d} p^{(n)}$ , which naively requires $d$ generating points ( $G_{\vec{\eta}}^{(0)}$ ) to be evaluated following the above description. - As described in claim 5, we can instead choose to evaluate a generating point ( $G_{\vec{\eta}}^{(0)}$ ) for a single configuration of $\eta = 1$ so that $G_1^{(0)} = p^{(0)}$ . Then, it is easy to see that a generating map ( $\mathcal{Z}_{\eta}^{-1}$ ) exists to take the set of generating points $\mathcal{G}_{\eta} = (1, p^{(0)})$ to the desired outcome probabilities $\mathcal{P} = (p^{(0)}, 1 - p^{(0)})$ by evaluating the ZPG ( $\mathcal{L}_{\vec{\eta}}^{(0)}$ ) only once. Similar arguments can be applied to more complicated situations to obtain other desired quantities more efficiently, such as the $m = 2$ order integrated intensity correlation $g^{(2)}$, which without normalization is estimated by the summation $g^{(2)} = \sum_{n=1}^{d} n(n-1) p^{(n)}$ . As described in claim 6, the ZPG method provides this quantity by evaluating just 2 generating points regardless of the maximum photon number ($d$). More explicitly, it is obtained using a generating map ( $\mathcal{Z}_{\eta}^{-1}$ ) that can produce the equation $4\left(1 - 2G_{\eta_{\max}/2}^{(0)} + G_{\eta_{\max}}^{(0)}\right)$ , which converges to $g^{(2)}$ for $\eta_{\max} \to 0$.

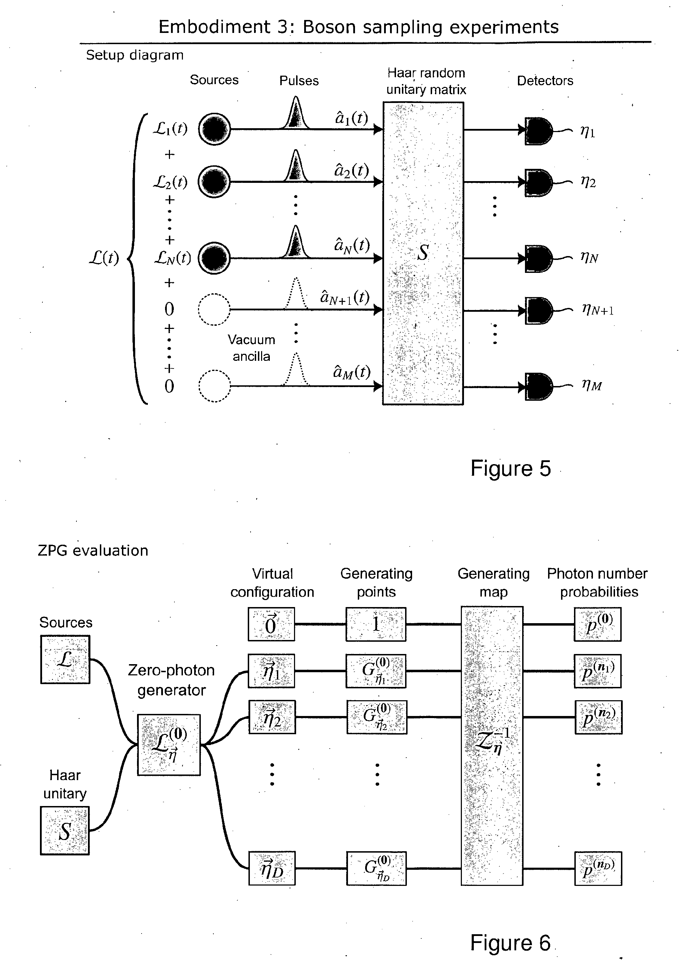

Figure 5 and 6 describe a third embodiment of the invention, designed for simulating Boson sampling experiments.

The multi-mode extension of the simple one-dimensional implementation gives rise to this boson sampling type experiment. in the setup diagram, we now have $M$ independent sources, with the first $N$ each emitting a pulse (12) of light and the last $M - N$ emitting of vacuum ancilla. The pulses (12) occupying the input modes (13) pass through a photonic circuit (14) that applies a scattering matrix ($S$) describing the physical implementation of a Haar random unitary matrix. The output modes (15) of the circuit (14) are monitored by $M$ detectors (16), and the outcomes ($N$) of the experiment are a subset of ($D$) non-trivial photon counting outcomes ($n$). The ZPG evaluation procedure follows identically to that of the second embodiment, although now each virtual configuration ($\vec{\eta}$) corresponds to a vector of $M$ virtual efficiencies ($\eta$), and we must evaluate the generating points of $D$ unique 'virtual configurations before applying the generating map ( $\mathcal{Z}_{\eta}^{-1}$ ).

Like before, instead of choosing the desired outcome quantities ( $\mathcal{P}$ ) to be photon number probabilities ($p^{(n)}$), we may instead choose any quantities ( $\mathcal{P}_N$ ) that are computed from the photon-number probabilities ($p^{(n)}$). Examples include specific multidetector correlators, probabilities for small subsets of detectors, and total photon count probability among large groups of detectors. Configuring the ZPG ( $\mathcal{L}_{\vec{\eta}}^{(0)}$ ) for specific desired outcome quantities can often result in fewer evaluations of the ZPG ( $\mathcal{L}_{\vec{\eta}}^{(0)}$ ).

In this multi-mode embodiment, if we choose to use two identical sources (11) and two detectors (16), where the scattering matrix ($S$) is instead a beam splitter unitary ($U_{BS}$) transformation, the resulting photon number probabilities ($p^{(n)}$) describe the quality of Hong-Ou-Mandel interference, or the degree of indistinguishability, of photons produced by the source composing the sources (11). This is a critical figure of merit for single-photon based photonic devices.

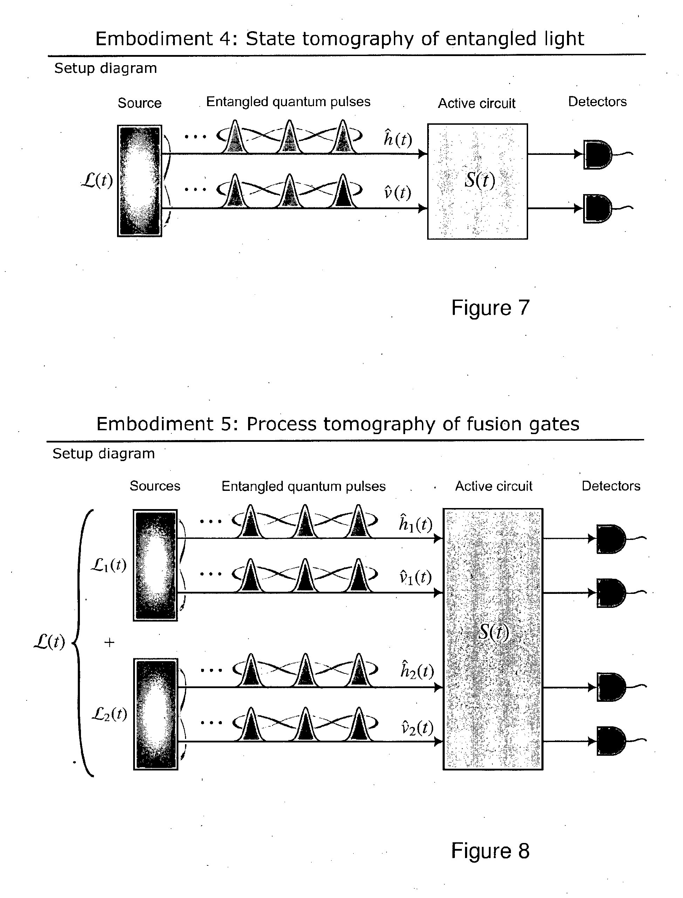

Figure 7 describes a fourth embodiment of the invention, designed for simulating state tomography of entangled light.

The ZPG method can be used to simulate devices (10) involving one or more single sources (11), that each produce light collected into more than one input mode (13), such as a polarized source of light that may emit a pulse (12) of light into a horizontally polarized mode, a vertically polarized mode, or into a superposition of both. Such sources of light can be used to produce quantum states of light where pulses (12) of light emitted in successive time bins ($j$) by the source (11) are entangled in this polarization degree of freedom. A famous example is the Lindner-Rudolph scheme for the deterministic generation of polarized photons in a linear cluster state [N. H. Lindner and T. Rudolph, Phys. Rev. Lett. 103, 113602 (2009)], which can be used as a resource to perform measurement-based quantum optical computing.

It is not easy to simulate the amount of entanglement produced by a realistic system when having access only to the quantum dynamics of the source. Using the ZPG method, this problem is solved by performing a virtual quantum state tomography on the entangled state of light using simulated outcome quantities ($\mathcal{P}$) produced using a photonic circuit (14) that applies different scattering matrices ($S$) to each time bin ($j$). The outcome quantities ($\mathcal{P}$) produced by simulating multiple scattering matrices ($S$) will then provide enough information to reconstruct the entangled photonic state using standard state tomography methods such as maximum likelihood estimation. As before, if we are only interested in a few outcomes that characterise desired properties of the state of light, the ZPG method may also be configured to obtain the same solution by computing many fewer generating points than naively expected. This is particularly important when characterising stabiliser states where the amount of entanglement can be efficiently deduced from a few specific measurements.

On figure 7, the setup diagram illustrates a virtual quantum state tomography of a linear cluster state of polarized photons produced by a physical source. The cluster state spans two polarization modes, illustrated by the horizontally polarized mode annihilation operator ($\hat{h}$) and the vertically polarized mode photon annihilation operator ($\hat{v}$). The scattering matrix ($S$) is explicitly time ($t$) dependent to illustrate that different measurements can be performed for each time bin ($j$), which is crucial to determine the amount of entanglement.

As defined in claim 2, the ZPG method can be used to obtain the conditional channels ($\mathcal{K}^{(n)}$) acting on the source (11) corresponding to each possible measurement we wish to make for one time bin ($j$). Then, the virtual tomography can be completed for large cluster states simply by applying separate time-bin conditional channels, in various permutations, to an initial source state ($\hat{\rho}(t_0)$), which can significantly reduce simulation time for cluster states containing many photons.

As defined in claim 3, the ZPG method also allows us to obtain the conditional state ($\hat{\rho}^{(n)}$) of the source (11) given we observed a particular measurement outcome for the virtual tomography. Thus, we can also perform a virtual light-matter interaction process tomography for the generation of a single pulse (12) in the cluster. This process map can then be applied multiple times to directly produce the entire reconstructed linear cluster state, without needing to explicitly simulate the time dynamics of the entire cluster state generation.

Since this fourth embodiment includes multiple time-bins, the ZPG evaluation for this scenario is organized in an identical way as in Figure 2.

Figure 8 describes a fifth embodiment of the invention, designed for simulating process tomography of fusion gates.

To build a photonic graph state that is big enough to be useful for measurement-based quantum computing, it is necessary to fuse many cluster states together. The fusion gate, which fuses two cluster states, is thus an important process to study. The experimental setup is almost identical to the fourth embodiment, but now we interfere two cluster states, and measure the result with detectors.

The ZPG method allows us to simulate a fusion gate while capturing all subtle imperfections of the incoming cluster states, as well as imperfections in the circuit used to perform the interference, and the detectors used to fuse the photons. We can also simulate the measurements used to characterise the graph state produced by the fusion gate. Thus, the ZPG method provides all the ingredients needed to perform a full quantum process tomography of a fusion gate, which is a critical simulation to understand and optimize the processes to build components for a quantum computer.

Since this fifth embodiment includes multiple time-bins, the ZPG evaluation for this scenario is organized in an identical way as in Figure 2.

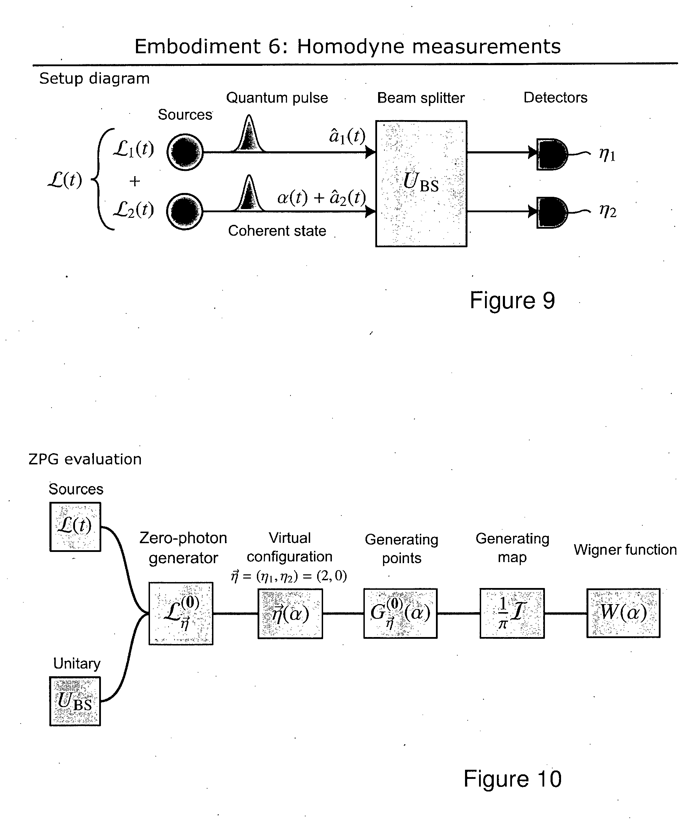

Figures 9 and 10 describe a sixth embodiment of the invention, designed for simulating homodyne measurements.

The Wigner function ($W$) provides all the information needed to construct a state of a single pulse mode. However, obtaining it from a physical source is a difficult task. The measurement of a Wigner function ($W$) can be formulated as a photonic device (10) where two sources (11) each produce one pulse (12). One source produces a pulse to be measured, and a second source acts as a local oscillator and produces a pulse prepared in a coherent state, a laser pulse. The two pulses (12) in the input modes (13) are interfered in a beam splitter ($U_{BS}$) circuit (14) with a transmissivity very close to 1 so as not to increase the photon loss experienced by the pulse to be measured. The result is that the laser pulse displaces the pulse to be measured in phase space by the complex amplitude ($\alpha$).

As defined in claim 7, the ZPG method allows for an efficient simulation of the Wigner function ($W$) at the origin of phase space by evaluating the ZPG ($\mathcal{L}_{\vec{\eta}}^{(0)}$) only once for a specific virtual detector configuration $(\vec{\eta})$ where one detector has a virtual efficiency of 2. The generating map ($\mathcal{Z}_{\eta}^{-1}$) then simply becomes the identity map ($\mathcal{I}$) divided by pi ($\pi$). This provides an efficient way to determine key properties of a state of light, such as the Wigner negativity for an imperfect single photon state. By choosing the complex amplitude ($\alpha$) appropriately, we can thus also measure the Wigner function ($W$) at any point in phase space with a single evaluation of the ZPG ($\mathcal{L}_{\vec{\eta}}^{(0)}$). Or, by repeating the simulation using many different complex amplitudes ($\alpha$), we can numerically reconstruct the full Wigner function ($W(\alpha)$) over any domain we wish.

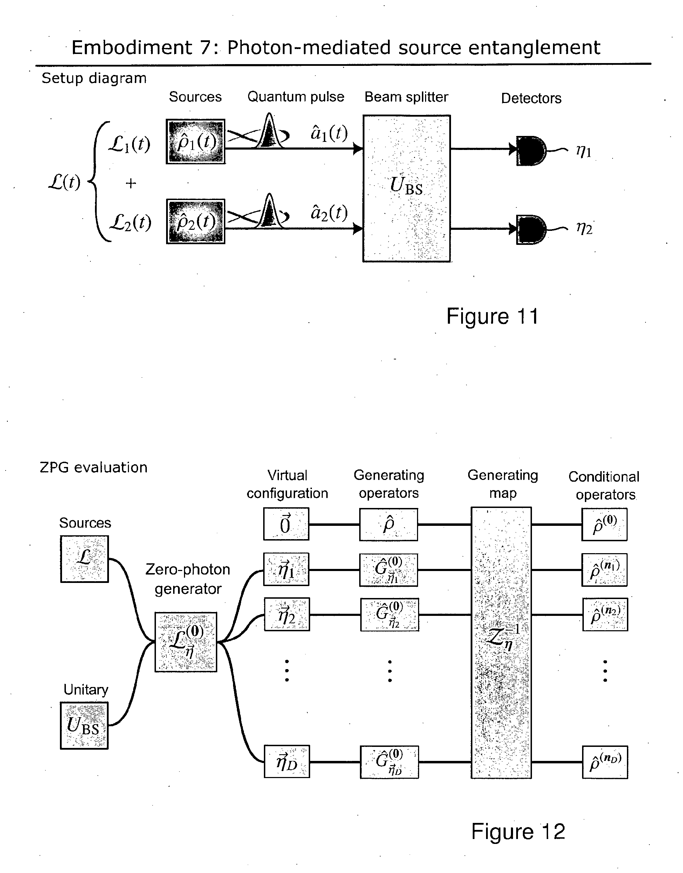

Figures 11 and 12 describe a seventh embodiment of the invention, designed for simulating photon-mediated source entanglement.

A common scenario in distributed spin-photon quantum computing or quantum communication is the process of generating entanglement between remote quantum memories via the interference and subsequent detection of light emitted by those memories. This setup shows a photonic device (10) comprising two sources (11) acting as quantum memories that each emit a pulse (12) of light that remains entangled with the state of its source. When these two pulses (12) occupying the input modes (13) interfere at a beam splitter ($U_{BS}$) circuit (14), the pulses (12) in the output modes (15) can then become entangled, provided that the detectors (16) observe a certain outcome. But, by detecting light, the light is destroyed, and instead the entanglement is projected solely onto the state of the sources, thus entangling the quantum memories.

This setup can be evaluated using the ZPG method, as defined in claim 3, to provide the conditional states ($\hat{\rho}^{(n)}$) of the sources (11) given the photon counting outcomes ($n$). By analysing these conditional states ($\hat{\rho}^{(n)}$), we can assess the quality of entanglement that the device produced between the quantum memories.

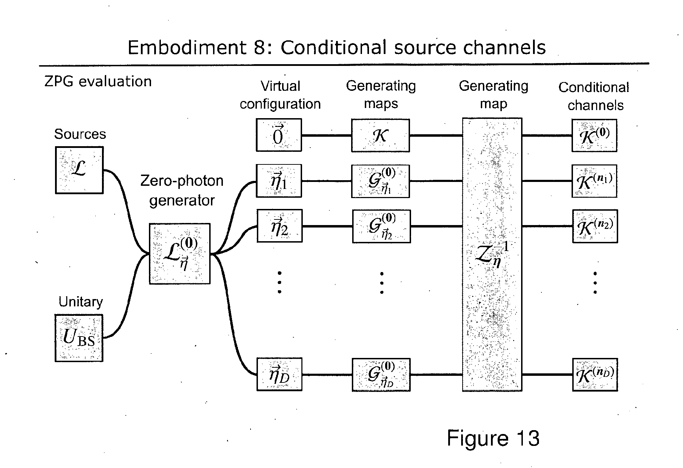

Figure 13 describes an eighth embodiment of the invention, designed for simulating conditional source channels.

Using the same setup as in the seventh embodiment, we can choose to evaluate the conditional quantum channels ($\mathcal{K}^{(n)}$) that act on the source (11) given a photon counting outcome ($n$) was observed, as defined in claim 2. These channels can be then applied to any pair of quantum memories in a much larger photonic device (10) without simulating the device again. Such a scenario is useful to simulate quantum repeaters, which can be constructed from spin-photonic devices composed of many quantum memories used to propagate entangled states across global distances by sequentially entangling pairs of quantum memories.

Other non-shown embodiments can be implemented within the scope of the invention. When possible, technical features of the different embodiments can be, in whole or part, combined with each other. Thus, the method and the system can be adapted to the specific requirements of the application.

**TABLES OF REFERENCES**

Numbered objects

(10)    The photonic device.
(11)    The at least one source.
(12)    The at least one pulse.
(13)    The at least one input mode.
(14)    The photonic circuit.
(15)    The at least one output mode.
(16)    The at least one detector.

Symbols for the claims

$t_0$ The initial time: the time we start running the photonic device (10).

$t$ The time: the current time, which may be the final time of the device (10) operation.

$\hat{\rho}$ The density operator of the source (11) that follows the equation

$$d\hat{\rho}(t)/dt = \mathcal{L}(t)\hat{\rho}(t).$$

$\hat{\rho}(t_0)$ The initial state of the source (11).

$\mathcal{L}$ The source generator: generates the time dynamics of the source (11).

$i$ The mode index that labels the input modes (13) or the output modes (15).

$S$ The scattering matrix quantifying the circuit (14).

$\hat{a}_i$ The photon annihilation operator of the input mode (13) labelled $i$.

$\hat{\sigma}_i$ The lowering operator of the source (11) for light emitted into the input mode (13) labelled $i$.

$c_i$ The proportionality coefficient defined by $\hat{a}_i \propto c_i\hat{\sigma}_i$.

$\vec{\mathcal{J}}^+$ The vector of right-acting half-jump super-operators ( $\mathcal{J}_i^+$ ) defined by $\mathcal{J}_i^+ \hat{\rho} = c_i^* \hat{\rho} \hat{\sigma}^\dagger$ .

$\vec{\mathcal{J}}^-$ The vector of left-acting half-jump superoperators ( $\mathcal{J}_i^-$ ) defined by $\mathcal{J}_i^- \hat{\rho} = c_i \hat{\sigma} \hat{\rho}$

$\vec{\mathcal{J}}_S$ The vector of detector jump superoperators that depends on the scattering matrix **S.**

$\mathcal{J}_i$ The detector jump superoperator: how $\hat{\rho}$ changes if a photon in output mode *i* is detected.

$\eta_i$ The virtual efficiency of the detector (16) monitoring an output mode (15) labelled *i*

$\vec{\eta}$ The virtual configuration of virtual efficiencies in vector form.

$\tilde{\eta}$ The diagonal matrix form of the virtual configuration, where the diagonal is $\vec{\eta}$

$\eta$ The set of virtual configurations $\vec{\eta}$.

$\mathcal{L}_{\vec{\eta}}^{(0)}$ The zero-photon generator
$$\mathcal{L}_{\vec{\eta}}^{(0)} = \mathcal{L} - \vec{\eta} \cdot \vec{\mathcal{J}}_S$$

$\mathcal{P}$ The set of at least one desired outcome quantity.

*N* At least one outcome.

$\mathcal{P}_N$ A member of the set $\mathcal{P}$ that is associated with observing at least one outcome **N.**

$\mathcal{G}_\eta$ The set of all generating quantities corresponding to virtual configurations in the set $\eta$.

$\mathcal{Z}_\eta^{-1}$ The generating map $\mathcal{P} = \mathcal{Z}_\eta^{-1}\{\mathcal{G}_\eta\}$ that outputs $\mathcal{P}$ given $\mathcal{G}_\eta$ .

$\mathcal{G}_{\vec{\eta}}^{(0)}$ The generating superoperator that is the solution to

$$d\mathcal{G}_{\vec{\eta}}^{(0)}(t, t_0)/dt = \mathcal{L}_{\vec{\eta}}^{(0)}(t)\mathcal{G}_{\vec{\eta}}^{(0)}(t, t_0)$$

$\hat{G}_{\vec{\eta}}^{(0)}$ The generating operator that is the solution
$$d\hat{G}_{\vec{\eta}}^{(0)}(t)/dt = \mathcal{L}_{\vec{\eta}}^{(0)}(t)\hat{G}_{\vec{\eta}}^{(0)}(t)$$
to

$G_{\vec{\eta}}^{(0)}$ The generating point that is the solution to
$$dG_{\vec{\eta}}^{(0)}(t)/dt = \mathrm{Tr}\left\{\mathcal{L}_{\vec{\eta}}^{(0)}(t)\hat{G}_{\vec{\eta}}^{(0)}(t)\right\}$$
.

*n* The photon counting outcome: how many photons were counted in each output mode (15).

$n_i$ The number of photons detected in the output mode (15) labelled *i* given **n.** $\mathcal{K}^{(n)}$ The conditional channel that acts on $\hat{\rho}$ given the photon counting outcome **n.**

$\hat{\rho}^{(n)}$ The conditional density operator of the source (11) given the photon counting outcome **n**

**p**$^{(n)}$ The probability of observing the photon counting outcome **n.**

$\mathcal{K}$ The set of conditional channels $\mathcal{K}^{(n)}$ .

$\hat{\rho}$ The set of conditional states $\hat{\rho}^{(n)}$.

**p** The set of photon counting probabilities **p**$^{(n)}$.

$P_{\vec{\eta}}$ The conditional probability where $P_{\vec{\eta}}(0|n = \Pi_i(1 - \eta_i)^{n_i}$.

*m* The order of auto-correlation.

**g**$^{(m)}$ The order **m** integrated intensity auto-correlation.

$\eta_{max}$ A maximum efficiency value that is used for simulating auto-correlations.

**W** The Wigner function.

$\alpha$ The complex amplitude.

Additional symbols for the embodiments

$U_{BS}$ A beam splitter unitary.

*I* The identity matrix.

$\mathcal{I}$ The identity map.

*j* The time bin index.

$D_j$ The number of virtual configurations for time bin *j*.

*d* The maximum number of photons that can be detected with a non-negligible probability.

*N* The number of non-vacuum input modes (13).

*M* The total number of input modes (13) and output modes (15).

$\hat{h}$ The photon annihilation operator of horizontally polarized photons.

$\hat{v}$ The photon annihilation operator of vertically polarized photons.

**Claims**

1. **Method for implementing a zero-photon generator, comprising a first step** of forming a photonic device (10) with at least one source (11) producing at least one pulse (12) collected into at least one input mode (13), a photonic circuit (14) that transforms the at least one input mode (13) into at least one output mode (15), and at least one detector (16) monitoring the at least one output mode (15),

   wherein for the at least one source (11) :

   - $\hat{\rho}$ is a density operator quantifying the state of the at least one source (11) that evolves in time (*t*) from an initial state ($\hat{\rho}(t_0)$) at an initial time ($t_0$) following a master equation

   $$\frac{d}{dt}\hat{\rho}(t) = \mathcal{L}(t)\hat{\rho}(t)$$

   defined by the source generator ($\mathcal{L}$) that is a superoperator able to evolve in time, and that generates the time dynamics of the at least one source (11) ;

   wherein for the photonic circuit (14) :

   - *S* is a scattering matrix that is able to evolve in time, and that describes how the photonic circuit (14) transforms the at least one input mode (13) into the at least one output mode (15) ;

wherein for the at least one detector (16) :

   - $\vec{\eta}$ is a virtual configuration of the at least one detector (16), that is a vector of at least one real or complex virtual efficiency ($\eta_i$) of the at least one detector (16) monitoring a mode of the at least one output mode (15) labelled by the mode index (*i*), and that may be a function of the time (*t*) ;

   - $\vec{\mathcal{J}_S}$ is the detector jump vector, which is a vector of at least one detector jump superoperator ( $\mathcal{J}_i$ ), where each detector jump superoperator ( $\mathcal{J}_i$ ) depends on the scattering matrix (*S*) and describes the action on the density operator ($\hat{\rho}$) of the at least one source (11) caused by the at least one detector (16) detecting a photon in a mode of the at least one output mode (15) with the mode index (*i*);

such that:

$$\mathcal{L}_{\vec{\eta}}^{(0)} = \mathcal{L} - \vec{\eta} \cdot \vec{\mathcal{J}_S}$$

is a zero-photon generator, which is a superoperator that generates the time dynamics of the at least one source (11) given that no photons in the at least one output mode (15) were detected by the at least one detector (16) with the virtual configuration ($\vec{\eta}$) ; and
a **second step** of simulating a set of at least one desired outcome quantity ( $\mathcal{P}$ ), each member ( $\mathcal{P}_N$ ) of the set ( $\mathcal{P}$ ) being associated with the at least one detector (16) observing at least one outcome (*N*) when running the photonic device (10) from the initial time ($t_0$) until the time (*t*), by using a set of at least one generating quantity ( $\mathcal{G}_\eta$ ) determined by evaluating the zero-photon generator ( $\mathcal{L}_{\vec{\eta}}^{(0)}$ ) for each unique virtual configuration ($\vec{\eta}$) contained in a set of at least one virtual configuration ($\eta$), so that there exists a generating map ( $\mathcal{Z}_\eta^{-1}$ ) defined by the set of at least one virtual config-

uration ($\eta$) such that $\mathcal{P} = \mathcal{Z}_\eta^{-1}\{\mathcal{G}_\eta\}$ .

2. **Method according to claim 1, wherein in the second step,** the set of at least one desired outcome quantity ($\mathcal{P}$) is a set of at least one desired conditional quantum channel ($\mathcal{K}$) composed of conditional quantum channels ($\mathcal{K}^{(n)}$) that act on the density operator ($\wedge$) of the at least one source (11), given that the at least one outcome ($N$) is a photon counting outcome ($n$), by choosing the set of at least one generating quantity ($\mathcal{G}_\eta$) to be composed of generating superoperators ($\mathcal{G}_{\vec{\eta}}^{(0)}$) that are the general solutions to the modified master equation :

$$\frac{d}{dt}\mathcal{G}_{\vec{\eta}}^{(0)}(t, t_0) = \mathcal{L}_{\vec{\eta}}^{(0)}(t)\mathcal{G}_{\vec{\eta}}^{(0)}(t, t_0)$$,

that is defined by the zero-photon generator ($\mathcal{L}_{\vec{\eta}}^{(0)}$) for each unique virtual configuration ($\vec{\eta}$) in the set of at least one virtual configuration ($\eta$) so that the generating map ($\mathcal{Z}_\eta^{-1}$) can be obtained by inverting a channel generating function :

$$\mathcal{G}_{\vec{\eta}}^{(0)} = \sum_n P_{\vec{\eta}}(0|n)\mathcal{K}^{(n)}$$,

wherein :

$$P_{\vec{\eta}}(0|n) = \prod_i (1 - \eta_i)^{n_i}$$

is the zero-photon conditional probability, which is the probability that the at least one detector (16) with the virtual configuration ($\vec{\eta}$) failed to detect one or more photons given that we would get the photon counting outcome ($n$) if every virtual efficiency ($\eta_i$) of the virtual configuration ($\wedge$) was unity ; - $n_i$ is the number of photons detected by the at least one detector (16) that is monitoring a mode of the at least one output mode (15) with the mode index ($i$), given the photon counting outcome ($n$);

such that $\mathcal{K} = \mathcal{Z}_\eta^{-1}\{\mathcal{G}_\eta\}$ .

3. **Method according to any** one the **previous claims 1 or 2,** the set of the at least one desired outcome quantity ($\mathcal{P}$) is a set of at least one conditional density operator ($\hat{\rho}$) composed of conditional density operators ($\hat{\rho}^{(n)}$) that quantify the state of the at least one source (11) at time ($t$) given that the at least one outcome ($N$) is a photon counting outcome ($n$) observed between the initial time ($t_0$) and the time ($t$), by choosing the set of at least one generating quantity ($\mathcal{G}_\eta$) to be composed of generating operators ($\hat{G}_{\vec{\eta}}^{(0)}$), wherein in the second step, the generating operators ($\hat{G}_{\vec{\eta}}^{(0)}$) can be determined as solutions to the modified master equation :

$$\frac{d}{dt}\hat{G}_{\vec{\eta}}^{(0)}(t) = \mathcal{L}_{\vec{\eta}}^{(0)}(t)\hat{G}_{\vec{\eta}}^{(0)}(t)$$,

with initial condition $\hat{G}_{\vec{\eta}}^{(0)}(t_0) = \hat{\rho}(t_0)$ and that is defined by the zero-photon generator ($\mathcal{L}_{\vec{\eta}}^{(0)}$) for each unique virtual configuration ($\vec{\eta}$) in the set of at least one virtual configuration ($\eta$), or in a third step following $\hat{G}_{\vec{\eta}}^{(0)}(t) = \mathcal{G}_{\vec{\eta}}^{(0)}(t, t_0)\hat{\rho}(t_0)$ after having determined the corresponding generating superoperator ($\mathcal{G}_{\vec{\eta}}^{(0)}$) in the second step, so that the generating map ($\mathcal{Z}_\eta^{-1}$) can be obtained by inverting an operator generating function:

$$\hat{G}_{\vec{\eta}}^{(0)} = \sum_n P_{\vec{\eta}}(0|n)\hat{\rho}^{(n)}$$,

such that $\hat{\rho} = \mathcal{Z}_\eta^{-1}\{\mathcal{G}_\eta\}$ .

4. Method according to any one of the previous claims 1 to 3, wherein the set of at least one desired outcome quantity ($\mathcal{P}$) is a set of at least one desired photon number probability ($p$) composed of photon number probabilities ($p^{(n)}$) given that the at least one outcome ($N$) is a photon counting outcome ($n$) observed between the initial time ($t_0$) and the time ($t$), by choosing the set of at least one generating quantity ($\mathcal{G}_\eta$) to be composed of generating points ($G_{\vec{\eta}}^{(0)}$), wherein in the second step, the generating points ($G_{\vec{\eta}}^{(0)}$) can be determined as solutions to the modified rate equation :

$$\frac{d}{dt}G_{\vec{\eta}}^{(0)}(t) = \mathrm{Tr}\left\{\mathcal{L}_{\vec{\eta}}^{(0)}(t)\hat{G}_{\vec{\eta}}^{(0)}(t)\right\} ,$$

with initial condition $\hat{G}_{\vec{\eta}}^{(0)}(t_0) = \hat{\rho}(t_0)$ along with $G_{\vec{\eta}}^{(0)}(t_0) = 1$ , and that is defined by the zero-photon generator ($\mathcal{L}_{\vec{\eta}}^{(0)}$) for each unique virtual configuration $(\vec{\eta})$ in the set of at least one virtual configuration ($\eta$), or in a third step following

$$G_{\vec{\eta}}^{(0)} = \mathrm{Tr}\{\mathcal{G}_{\vec{\eta}}^{(0)}(t, t_0)\hat{\rho}(t_0)\}$$

after having determined the corresponding generating superoperator ($\mathcal{G}_{\vec{\eta}}^{(0)}$) in the second step, or in a fourth step following

$$G_{\vec{\eta}}^{(0)} = \mathrm{Tr}\left\{\hat{G}_{\vec{\eta}}^{(0)}\right\}$$

after having determined the corresponding generating operator ($\hat{G}_{\vec{\eta}}$) in the third step, so that the generating map ($\mathcal{Z}_\eta^{-1}$) can be obtained by inverting a probability generating function:

$$G_{\vec{\eta}}^{(0)} = \sum_n P_{\vec{\eta}}(0|n)p^{(n)} ,$$

such that $p = \mathcal{Z}_\eta^{-1}\{\mathcal{G}_\eta\}$ .

5. Method according to any one of the previous claims 1 to 4, wherein at least one virtual efficiency ($\eta_i$) of the virtual configuration $(\vec{\eta})$ is restricted to be a binary value, either 0 or 1, so that the generating map ($\mathcal{Z}_\eta^{-1}$) is configured to provide the set of at least one desired outcome quantity ($\mathcal{P}$) that contains at least one member ($\mathcal{P}_N$) associated with observing the at least one outcome ($N$) that includes at least one outcome where the at least one detector (16) observes either the presence or absence of light in one or more of the at least one output mode (15).

6. Method according to any one of the previous claims 1 to 4, wherein at least one virtual efficiency ($\eta_i$) of the virtual configuration $(\vec{\eta})$ is restricted to be chosen from $m + 1 \geq 2$ values equally distributed between 0 and a chosen value $\eta_{max} \leq 1$, so that the generating map ($\mathcal{Z}_\eta^{-1}$) is configured to provide the set of at least one desired outcome quantity ($\mathcal{P}$) that contains at least one member ($\mathcal{P}_N$) associated with observing the at least one outcome ($N$) that includes the order $m$ coincidence auto-correlation outcome of one or more modes of the at least one output mode (15), and wherein taking $\eta_{max} \to 0$ will also provide the set of at least one desired outcome quantity ($\mathcal{P}$) that contains at least one member ($\mathcal{P}_N$) associated with observing the at least one outcome ($N$) that includes the order $m$ integrated intensity auto-correlation ($g^{(m)}$) outcome of one or more modes of the at least one output mode (15).

7. Method according to any one of the previous claims 1 to 4, wherein at least one virtual efficiency ($\eta_i$) of the virtual configuration $(\vec{\eta})$ is restricted to be exactly 2, so that the associated zero-photon conditional probability ($P_{\vec{\eta}}(0|n)$) of a photon counting outcome ($n$) contains the term $(1-\eta_i)^{n_i} = (-1)^{n_i}$, leading to a parity summation over the number of photons ($n_i$), which corresponds to the Wigner function ($W$)

at the origin of phase space, so that by choosing the at least one source (11) to include a local oscillator, such as a laser, able to displace the light in phase space by the complex amplitude ($\alpha$) prior to the at least one detector (16), the generating map ($\mathcal{Z}_\eta^{-1}$) is configured to provide the set of at least one desired outcome quantities ($\mathcal{P}$) that contains at least one member ($\mathcal{P}_N$) associated with observing the at least one outcome ($N$) that includes at least one phase-space measurement outcome.

8. **Method according to any one of the previous claims 1 to 4, wherein** at least one virtual efficiency ($\eta_i$) of the virtual configuration ($\vec{\eta}$) is restricted to be chosen from unique complex values where $1 - \eta_i$ is a root of unity, so that the magnitude $|1 - \eta_i| = 1$ is constant, and so that the corresponding generating map ($\mathcal{Z}_\eta^{-1}$) can be partially implemented as an inverse discrete Fourier transform.

9. **Method according to any one of the previous claims 1 to 8, wherein** the choice for the set of at least one virtual configuration ($\eta$) and the corresponding generating map ($\mathcal{Z}_\eta^{-1}$) needed to obtain the set of at least one desired outcome quantity ($\mathcal{P}$) from the set of at least one generating quantity ($\mathcal{G}_\eta$) is determined, at least partially, using numerical optimization or machine learning techniques including linear regression, maximum-likelihood estimation, and neural networks.

10. **Method according to any one the previous claims 1 to 9, wherein** the at least one source (11) is a single source.

11. **Method according to any one the previous claims 1 to 10, wherein** the at least one source (11) is an ensemble of sources.

12. **Method according to any one of the previous claims 1 to 11, wherein** the at least one source (11)has degrees of freedom that can be entangled with the state of light..

13. **Method according to any one of the previous claims 1 to 12, wherein** the action on the at least one source (11) due to detecting a photon by the at least one detector (16) is described by a proportionality relationship $\hat{a}_i \propto c_i \hat{\sigma}_i$ between the annihilation operator ($\hat{a}_i$)of a mode of the at least one input mode (13) with the mode index ($i$) and the lowering operator ($\hat{\sigma}_i$) of the at least one source (11) responsible for emitting light into a mode of the at least one input mode (13) with the mode index ($i$), where the complex proportionality coefficient ($c_i$), which may or may not be dependent on time, is related to the rate of photons collected into a mode of the at least one input mode (13) with the mode index ($i$), such that the that the zero-photon generator takes the form :

$$\mathcal{L}_{\tilde{\eta}}^{(0)} = \mathcal{L} - \vec{\mathcal{J}}^+ \cdot \left( S^\dagger \tilde{\eta} S \right) \cdot \vec{\mathcal{J}}^-,$$

wherein :

- $\vec{\mathcal{J}}^+$ is a vector of right-acting half-jump superoperators ( $\mathcal{J}_i^+$ ) defined by the action $\mathcal{J}_i^+ \hat{\rho} = c_i^* \hat{\rho} \hat{\sigma}^\dagger$ on the density operator ($\hat{\rho}$) of the at least one source (11) ;

- $\vec{\mathcal{J}}^-$ is a vector of left-acting half-jump superoperators ( $\mathcal{J}_i^-$ ) defined by the action $\mathcal{J}_i^- \hat{\rho} = c_i \hat{\sigma} \hat{\rho}$ on the density operator ($\hat{\rho}$) of the at least one source (11) ;
- $\tilde{\eta}$ is the diagonal matrix where the diagonal is given by the virtual configuration ($\vec{\eta}$).

14. **System configured to implement the method of claims 1 to 13,** the system comprising:

   - a photonic device (10) with at least one source (11) producing at least one pulse (12) collected into at least one input mode (13), a photonic circuit (14) that transforms the at least one input mode (13) into at least one output mode (15), and at least one detector (16) monitoring the at least one output mode (15).
   - a computer unit configured for simulating operation of the photonic device.

15. **System** according to the previous claim 14, designed to process quantum information.

Figure 1

Figure 2

# Embodiment 2: Source photon number statistics

Setup diagram

Source      Pulse      Identity   Detector

$\mathcal{L}(t)$

$\hat{a}(t)$

$I$

$\eta$

## Figure 3

ZPG evaluation

Virtual          Generating          Generating          Photon number
configuration          points          map          probabilities

Source

$\mathcal{L}$

Zero-photon
generator

$\mathcal{L}_{\eta}^{(0)}$

Identity

$I$

$0$          $1$          $p^{(0)}$

$\eta_1$          $G_{\eta_1}^{(0)}$          $p^{(1)}$

$\eta_2$          $G_{\eta_2}^{(0)}$          $p^{(2)}$

$\mathcal{Z}_{\eta}^{-1}$

$\eta_d$          $G_{\eta_d}^{(0)}$          $p^{(d)}$

## Figure 4

## Embodiment 3: Boson sampling experiments

**Setup diagram**

Figure 5

**ZPG evaluation**

Figure 6

# Embodiment 4: State tomography of entangled light

Setup diagram

Source   Entangled quantum pulses   Active circuit   Detectors

$\hat{h}(t)$

$\hat{v}(t)$

$\mathcal{L}(t)$

$\hat{S}(t)$

## Figure 7

# Embodiment 5: Process tomography of fusion gates

Setup diagram

Sources   Entangled quantum pulses   Active circuit   Detectors

$\hat{h}_1(t)$

$\hat{v}_1(t)$

$\mathcal{L}_1(t)$

$\mathcal{L}(t)$

$+$

$\hat{h}_2(t)$

$\hat{v}_2(t)$

$\mathcal{L}_2(t)$

$\hat{S}(t)$

## Figure 8

# Embodiment 6: Homodyne measurements

## Setup diagram

Figure 9

## ZPG evaluation

Figure 10

# Embodiment 7: Photon-mediated source entanglement

## Setup diagram

**Figure 11**

## ZPG evaluation

**Figure 12**

## Embodiment 8: Conditional source channels

Figure 13

Europäisches
Patentamt

European
Patent Office

Office européen
des brevets

# EUROPEAN SEARCH REPORT

Application Number

**EP 23 31 5091**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | STEPHEN C WEIN: "Modelling Markovian light-matter interactions for quantum optical devices in the solid state", ARXIV.ORG, CORNELL UNIVERSITY LIBRARY, 201 OLIN LIBRARY CORNELL UNIVERSITY ITHACA, NY 14853, 13 May 2021 (2021-05-13), XP081965997, * Sections 1.2.4, 1.3.7, 2.1, Chapter 2.; figure 1.1 * | 1-15 | INV. G06F30/20 |
| | ----- | | |
| T | STEPHEN C WEIN: "Simulating time-integrated photon counting using a zero-photon generator", ARXIV.ORG, CORNELL UNIVERSITY LIBRARY, 201 OLIN LIBRARY CORNELL UNIVERSITY ITHACA, NY 14853, 31 July 2023 (2023-07-31), XP091577618, * the whole document * | 1-15 | |
| | ----- | | |

TECHNICAL FIELDS
SEARCHED (IPC)

**G06F**

The present search report has been drawn up for all claims

| Place of search | Date of completion of the search | Examiner |
|---|---|---|
| Munich | 26 September 2023 | Winkelbauer, Andreas |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **K. FISCHER et al.** *Quantum,* 2018, vol. 2, 69

- **N. H. LINDNER ; T. RUDOLPH.** *Phys. Rev. Lett.,* 2009, vol. 103, 113602